# EUROPÄISCHE PATENTSCHRIFT

(11) **EP 3 021 991 B1**
(45) Veröffentlichungstag und Bekanntmachung des Hinweises auf die Patenterteilung: **18.03.2020**
(21) Anmeldenummer: 14750684.4
(22) Anmeldetag: 16.07.2014
(51) Int. Cl.: B21C 1/00, B22D 7/00, C21D 6/00, C21D 8/02, C21D 8/06, C21D 9/08, C22C 38/04, C22C 38/08, C22C 38/12, C22C 38/06, C22C 38/00, C22C 38/48, C22C 38/58, C22C 38/18, F16L 11/08, C21D 9/14, C21D 9/52, C21D 1/22, C21D 1/25, C21D 1/30

(54) **KALTGEWALZTES SCHMALBAND IN FORM VON FLACHDRAHT ODER PROFILEN AUS EINEM HOCHFESTEN STAHL FÜR DEN EINSATZ IN FLEXIBLEN ROHREN, INSBESONDERE IN FLEXIBLEN ROHREN FÜR OFFSHORE-ANWENDUNGEN SOWIE VERFAHREN ZUR HERSTELLUNG DERARTIGER KALTGEWALZTER SCHMALBÄNDER**
COLD-ROLLED NARROW STRIP IN THE FORM OF FLAT WIRE OR PROFILED ELEMENTS MADE OF A HIGH-STRENGTH STEEL FOR USE IN FLEXIBLE PIPES, IN PARTICULAR IN FLEXIBLE PIPES FOR OFFSHORE APPLICATIONS, AND METHOD FOR PRODUCING SUCH COLD-ROLLED NARROW STRIPS
FEUILLARD LAMINÉ À FROID SOUS FORME DE FIL PLAT OU DE PROFILÉS EN ACIER À HAUTE RÉSISTANCE DESTINÉS À ÊTRE UTILISÉS DANS DES TUYAUX SOUPLES, EN PARTICULIER DES TUYAUX SOUPLES POUR APPLICATIONS OFFSHORE, AINSI QUE PROCÉDÉ DE FABRICATION DE TELS FEUILLARDS LAMINÉS À FROID

(30) Priorität: 18.07.2013 DE 102013012118
(43) Veröffentlichungstag der Anmeldung: 25.05.2016
(73) Patentinhaber: C.D. Wälzholz GmbH, 58093 Hagen (DE)
(72) Erfinder: JUNIUS, Hans-Toni, 58239 Schwerte (DE); BUDDENBERG, Heino, 58300 Wetter (DE); BRACHTHÄUSER, Norbert, 44869 Bochum (DE); WILMES, Dirk, 58640 Iserlohn (DE)
(74) Vertreter: Schneider, Uwe
(86) Internationale Anmeldenummer: PCT/DE2014/000370
(87) Internationale Veröffentlichungsnummer: WO 2015/007265

(56) Entgegenhaltungen:
- EP-A1- 2 402 472
- WO-A1-2006/050680
- WO-A1-2011/120525
- WO-A1-2012/171530
- US-A1- 2004 050 442

## Beschreibung

Die Erfindung betrifft ein kaltgewalztes Schmalband in Form von Flachdraht oder Profilen aus einem hochfesten Stahl für den Einsatz in flexiblen Rohren, insbesondere in flexiblen Rohren für Offshore-Anwendungen gemäß Oberbegriff des Anspruches 1 sowie ein Verfahren zur Herstellung derartiger kaltgewalzter Schmalbänder gemäß Oberbegriff des Anspruches 12 und Verwendungen des kaltgewalzten Schmalbandes gemäß Ansprüchen 24 und 28.

Flexible Rohre werden in vielen Bereichen der Technik für die verschiedensten Zwecke verwendet und haben vorwiegend die Aufgabe, fluide Medien wie Wasser, Öl, Gas oder dgl. zu leiten und gegenüber der Umwelt abzuschirmen. Hierbei unterliegen derartige flexible Rohre verschiedensten Einflüssen, einmal Einflüssen aus der mechanischen Belastung aufgrund des Einsatzbereiches und der Einsatzumgebung und zum anderen Einflüssen aufgrund der physikalischen Eigenschaften und chemischen Zusammensetzung der zu leitenden Fluide.

Ein wichtiger und technisch sehr anspruchsvoller Einsatzbereich für derartige flexible Rohre sind die so genannten Offshore-Anwendungen, bei denen die flexiblen Rohre für den Einsatz im Meer verwendet werden. Hierbei werden die flexiblen Rohre zur Leitung von Wasser und/oder aggressiven Flüssigkeiten wie Öl oder Gasen verwendet, die beispielsweise vom Meeresboden an die Meeresoberfläche gebracht werden sollen, wobei die flexiblen Rohre bei Bedarf durch entsprechende Gestaltung so ausgelegt werden können, um in Wassertiefen von mindestens 2500 m benutzt zu werden. Der Transport derartiger Flüssigkeiten oder Gase erfolgt dabei über große Strecken, so dass die flexiblen Rohre auch entsprechende Längen aufweisen und dem gemäß hohen Belastungen sowohl aufgrund ihres Eigengewichtes als auch aufgrund der aus der Umgebung einwirkenden Kräften unterliegen.

Derartige flexible Rohre für Offshore-Anwendungen sind seit langem bekannt und werden nach verschiedenen Normen gefertigt. Derartige flexible Rohre weisen üblicherweise einen inneren, das zu transportierende Medium aufnehmenden rohrartigen und flexiblen Kern auf, der das zu transportierende Medium leitet und dicht gegenüber der Umgebung abschottet. Dieser flexible Kern wird üblicherweise aus polymeren Materialien hergestellt. Der flexible Kern wird umgeben von einer oder mehreren Armierungsschichten üblicherweise aus Stahlwerkstoffen, wobei aufgrund der notwendigen Flexibilität die Stahlwerkstoffe in Form von gewickelten Stahldrähten oder Stahlbändern auf den flexiblen Kern aufgebracht werden. Der flexible Kern und die eine oder mehrere Armierungsschichten sind dabei relativ zueinander nicht aneinander befestigt, sondern können sich in geringem Maße gegeneinander verschieben, wodurch die Flexibilität und Biegsamkeit der flexiblen Rohre verbessert wird. Die Armierungsschichten umgeben dabei den flexiblen Kern und schützen diesen einerseits gegen Belastungen aus der Umwelt und verstärken das flexible Rohr gegenüber Belastungen beim Transport, bei der Verlegung und beim Betrieb derartiger flexibler Rohre. Zwischen den Lagen der Armierungsschichten und/oder dem flexiblen Kern können zusätzlich Lagen aus polymeren Materialien angeordnet sein. Auch wird bei einigen Konstruktionen derartiger flexibler Rohre eine karkassenartige Verstärkung des flexiblen Kerns vorgenommen, wodurch die hohe Druckbelastung auf den inneren Kern aufgrund des hohen Umgebungsdrucks bei Tiefwassereinsatz aufgefangen werden soll. Die Armierungsschichten werden aus Stahldrähten oder Stahlbändern hergestellt, die bei der Herstellung des flexiblen Rohres schraubenförmig um den flexiblen Kern herum gewickelt werden. Es können auch Armierungsschichten unterschiedlicher Aufgaben an einem derartigen flexiblen Rohr vorgesehen werden, etwa als reine Verstärkungslage aus nebeneinander liegenden Flachbändern oder als sog. Formschlussprofil, bei dem die nebeneinander gewickelten Stahlbänder profiliert sind und sich mechanisch aneinander über Formschluss verankern und dadurch einen stabileren Verbund als die einfachen Verstärkungsbänder bilden. Hierzu müssen die zu verarbeitenden Bänder vorab entsprechend profiliert werden. Wenn im Folgenden vereinfachend von Armierungsbändern gesprochen wird, so können immer die unterschiedlichen bekannten Ausbildungen von metallischen Verstärkungselementen an derartigen flexiblen Rohren damit gemeint sein, unabhängig von Ihrer Anordnung in den einzelnen Schichten des flexiblen Rohrs und ihrem Aufbau aus einen oder mehreren parallel schraubenförmig gewundenen Strängen einer Armierungslage.

Andere Materialien können ebenso zu Verstärkung in Kombination mit metallischen Drähten benutzt werden. Zusammengesetzte Schichten oder Bänder können anstatt von einer oder mehreren metallischen Schichten für den Rohraufbau verwendet werden, um das Gewicht des flexiblen Rohres zu vermindern.

Die flexiblen Rohre werden üblicherweise aus einzelnen Stücken hergestellt, da sie häufig größere Längen erfordern, als herstellungstechnisch aus einem Vormaterial gefertigt werden kann. Daher müssen die Armierungsschichten der jeweiligen Teilstücke miteinander dauerhaft und hoch belastbar verschweißt werden können, so dass die verwendeten Stähle für die Armierungsschichten eine gute Schweißbarkeit aufweisen müssen.

Derartige flexible Rohre unterliegen im Einsatz hohen statischen oder dynamischen Belastungen. Dynamisch belastete Rohre erfordern den Einsatz hochfester Stähle. Die an den Enden der Stahldrähte bzw. Stahlbändern erforderlichen Schweißstellen müssen ebenso hohen Belastungen standhalten.

Durch den Kontakt mit flüssigen oder gasförmigen Medien, die H₂S und/oder CO₂ enthalten, sowie durch Kondensatbildung zwischen den Stahllagen können Korrosionsschäden entstehen. Auch kommt es durch unvermeidbare Diffusionsvorgänge aus den flüssigen oder gasförmigen Medien durch das Material des rohrartigen und flexiblen Kerns hindurch zumindest in den inneren Armierungslagen zu einer hohen Belastung durch Bestandteile der sauren Medien, die zu einer hohen Korrosionsbelastung der Armierungslagen führen. Deshalb müssen die verwendeten Stähle bei Einsatz in Kontakt mit sauren Medien eine gute Beständigkeit gegen Spannungsriss-korrosion und gegen Wasserstoffversprödung aufweisen. Allgemein gelten Stähle mit Zugfestigkeit größer als 1000 MPa als nicht oder wenig beständig gegen Spannungsrisskorrosion und Wasserstoffversprödung und scheiden daher für diese Anwendung aus.

Manganhaltige oder hochmanganhaltige austenitische Stähle, sog. TWIP-Stähle (TWIP - twinning induced plasticity), wurden in den letzten Jahren entwickelt als warm- und kaltgewalzte Bänder, über die Flacherzeugungsroute (Stahlwerk - Bramme (Rechteckformat) aus Strangguß oder gegossenem Block - Warmband oder Dünnband - Kaltband) und insbesondere für Strukturbauteile im Automobilbau verwendet. Die vorteilhaften Eigenschaften derartiger TWIP-Stähle gegenüber anderen hochfesten Stählen sind eine hohe Ausgangsfestigkeit im Warmband, eine hohe Verfestigung beim Kaltverformen und eine extrem gute Plastizität. Einige Legierungskonzepte bieten darüber hinaus eine gute Schweißbarkeit und eine stark verbesserte Beständigkeit gegenüber wasserstoffinduzierter Rissbildung.

Aus der EP 2 402 472 A1 ist ein höherfester kaltumformbarer Stahl und entsprechende Stahlflachprodukte bekannt, die als hochmanganhaltiger Stahl insbesondere eine gute Schweißeignung sowie TWIP-Verhalten aufweisen. Diese Stähle werden ausschließlich für die Verwendung im Karosseriebau in Form von Blechen oder Bändern beschrieben, die zudem hinsichtlich eines Korrosionsschutzes einer zusätzlichen Beschichtungsbehandlung unterworfen werden müssen. Die Herstellung dieser Stähle erfolgt dabei in konventioneller Weise und abgestimmt auf die später benötigten Abmessungen der Bleche oder Bänder mittels konventioneller Walzverfahren für breite Bandabmessungen.

Eine Verwendung hochmanganhaltiger Stähle für den Einsatz für flexible Rohre für Offshore-Anwendungen wird in der WO 2012/171530 A1 beschrieben, in der derartige Stähle für die Herstellung aus Schmalbändern gewickelter Armierungslagen beschrieben wird. Die Grundidee der dort beschriebenen Stähle für Armierungslagen in flexiblen Rohren besteht darin, die sonst in Armierungsstählen für flexible Rohre üblicherweise verwendeten teuren Bestandteile Kupfer und Nickel möglichst weitgehend zu vermeiden bzw. deren Anteil zu reduzieren, um die hohen Kosten für derartige Legierungsbestandteile zu verringern. Hierdurch werden zwar die Kosten für die verwendete Stahllegierung reduziert, gleichzeitig aber auch die Stahleigenschaften negativ beeinflusst. Weiterhin wird ein deutlich großer Siliziumgehalt der Legierung gefordert, der zur Verbesserung des Korrosionswiderstandes sowie zur Verbesserung der Verarbeitbarkeit des Stahles benötigt wird.

Aufgabe der vorliegenden Erfindung ist es daher, Flachdraht oder Schmalband mit profiliertem Querschnitt aus einem neuen hochfesten Stahl vorzuschlagen, mit dem alle Anforderungen an dynamisch belastete flexible Rohre für den Einsatz auch in saurer Umgebung erfüllt werden können, bei deutlich höheren Streckgrenzen und Zugfestigkeiten und gesteigerter Plastizität gegenüber heute üblichen hochfesten Stählen.

Die Lösung der erfindungsgemäßen Aufgabe ergibt sich aus den kennzeichnenden Merkmalen von bestimmten Ausgestaltungen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung betrifft ein Schmalband in Form von Flachdraht oder Formschlussprofilen aus einem hochfesten Stahl aufweisend ein austenitisches Gefüge mit TWIP-Eigenschaften mit folgender Zusammensetzung in Gewichts-%
C 0,2 - 0,9 %
Mn 12-25 %
Si bis zu 0,5 %
Al 0,5 - 2,0 %
Cr 1,8 - 3,5 %
S max. 0,005 %
P max. 0,06 %
N max. 0,1 %
Mo max. 1,5 %
B max. 0,01 %
Ni max. 2,0 %
Cu max. 2,0 %
Nb 0,02 - 0,35 % und/oder V 0,02 - 0,35
sowie optional
Ca max. 0,015 %
Ti 0,01 - 0,35 %
und als Rest Eisen und unvermeidbare, herstellungsbedingte Verunreinigungen, mit folgenden mechanischen Werten:

| | |
|---|---|
| R_{p0,2} | 1000 - 1500 MPa, |
| Rₘ | 1100 - 1700 MPa, |
| A80 | 6 - 25%, |

für die Herstellung von Armierungslagen in flexiblen Rohren für die Erdöl- und Erdgasförderung sowie zum Transport von Flüssiggas FLNG mit Sauergas-Bedingungen bei sauren Angriffsmedien.

Derartige Flachdrähte oder Schmalbänder mit profiliertem Querschnitt aus einem hochfesten Stahl mit der erfindungsgemäßen Zusammensetzung sind besonders für die Herstellung von Armierungslagen in flexiblen Rohren für die Erdöl- und Erdgasförderung sowie zum Transport von Flüssiggas (FLNG) mit Sauergas-Bedingungen (saure Angriffsmedien) geeignet, da sie neben einer hohen Ausgangsfestigkeit im Warmband eine hohe Verfestigung beim Kaltverformen und eine extrem gute Plastizität aufweisen und damit die mechanischen Anforderungen an derartige Flachdrähte oder Schmalbänder für die relevanten Einsatzgebiete in besonders hohem Maße erfüllen. Es hat sich darüber hinaus gezeigt, dass der erfindungsgemäße hochfeste Stahl zudem eine gute Schweißbarkeit bei der Benutzung bekannter Schweißtechnologien und eine stark verbesserte Beständigkeit gegenüber wasserstoffinduzierter Rissbildung aufweist. Diese stark verbesserte Beständigkeit gegenüber wasserstoffinduzierter Rissbildung lässt sich vor allem auf die Zulegierung des Elements Chrom im Umfang von 1,8 - 3,5 Gewichts-% zurückführen, da der Chrom mit den Elementen Kohlenstoff und Stickstoff feinverteilte Chromcarbide bzw. Chromnitride bildet, die bei Wasserstoffeintrag als Wasserstoff-Fänger dienen und über diesen Mechanismus eine Wasserstoff-induzierte Rissbildung verhindern. So eignet sich der erfindungsgemäße Stahl besonders für den Einsatz unter Sauergas-Bedingungen, wie sie beim Einsatz flexibler Rohre häufig vorkommen. Zudem haben die feinverteilten Ausscheidungen eine kornfeinende Wirkung, was wiederum die Rissempfindlichkeit mindert und die Verformbarkeit verbessert. Durch die Zulegierung des Chrom unterscheidet sich der erfindungsgemäße Stahl zudem deutlich von dem Stahl gemäß der WO 2012/1717530 A1, die den Chromgehalt ausdrücklich als gering fordert und diesen lediglich als unvermeidbares Begleitelement ansieht, höchstens jedoch auf einen Wert von 0,15 Gewichts-% begrenzt. Ein weiterer Unterschied liegt in dem geringen Silizium-Gehalt des erfindungsgemäßen Stahls, der im Bereich von nur bis von 0,5 Gewichts-% liegen darf. Die wesentlich höheren Anteile des Silizium bei der WO 2012/1717530 A1 werden dort ausdrücklich für die Verarbeitbarkeit des Stahls gefordert und können bei dem hier erfindungsgemäßen Stahl auf einen geringen Wert begrenzt werden. Zudem lassen sich durch die Verarbeitungsweise des erfindungsgemäßen Stahls über die drahtförmigen Vormaterialien sowie ein Kaltwalzen/Kaltprofilierung mechanische Eigenschaften erreicht werden, die oberhalb der bisher bekannten Eigenschaften von hochfesten Stählen für die erfindungsgemäßen Anwendungen liegen. Mit den Werten des hochfesten Stahls für R_{p0,2} zwischen 1000 und 1500 MPa, für Rₘ zwischen 1100 - 1700 MPa und für A80 zwischen 6 - 25 % liegen diese Werte derart, dass schon bei geringeren Materialquerschnitten die geforderte Belastbarkeit daraus hergestellter flexibler Rohre erreicht wird oder umgekehrt bei gleichen Abmessungen der flexiblen Rohre höher belastbare Rohre herstellbar sind. Damit eignen sich die Flachdrähte oder Schmalbänder mit profiliertem Querschnitt aus dem hochfesten Stahl besonders für die Herstellung von Armierungslagen in flexiblen Rohren für die Erdöl- und Erdgasförderung sowie zum Transport von Flüssiggas (FLNG) mit Sauergas-Bedingungen (saure Angriffsmedien), wenn diese flexiblen Rohre besonders große Längen aufweisen oder besonders hohen, insbesondere dynamischen Belastungen unterworfen sind. Hierdurch lässt sich wie schon durch die Verbesserung der Korrosionsanfälligkeit ebenfalls die Lebensdauer der üblicherweise 20 Jahre im Einsatz befindlichen flexiblen Rohre deutlich verlängern und die Ausfallsicherheit erhöhen.

Von besonderem Vorteil ist es, wenn der hochfeste Stahl für den Flachdraht oder das Schmalband ein austenitisches Gefüge, insbesondere auch mit TWIP-Eigenschaften aufweist. Derartige Gefüge haben eine hohe Ausgangsfestigkeit im Warmband, eine hohe Verfestigung beim Kaltverformen und eine extrem gute Plastizität bei der Umformung und bieten darüber hinaus eine gute Schweißbarkeit und eine stark verbesserte Beständigkeit gegenüber wasserstoffinduzierter Rissbildung.

In einer ersten Ausgestaltung ist der hochfeste Stahl für ein Schmalband mit runden oder flachen oder definiert angewalzten Kanten als Verstärkungsband für die Herstellung von gewickelten Armierungslagen einsetzbar. Derartige Verstärkungsbänder werden meist für die äußeren Schichten des flexiblen Rohres verwendet und müssen zur Gewährleistung einer guten Flexibilität des flexiblen Rohrs entsprechende Beweglichkeiten der daraus gewickelten Armierungslagen aufweisen, die auch durch die Kantengestaltung der Schmalbänder mit bestimmt wird. Diese Kantengestaltung kann bei dem erfindungsgemäßen Stahl besonders einfach hergestellt und formstabil gewährleistet werden.

In einer anderen Ausgestaltung ist der hochfeste Stahl für ein Schmalband mit profiliertem Querschnitt als Formschlussprofil, insbesondere Z-Profil als Armierungsband für die Herstellung von gewickelten Armierungslagen einsetzbar. Derartige Armierungslagen aus den erfindungsgemäßen Schmalbändern hergestellter flexibler Rohre werden meist direkt über dem flexiblen schlauchartigen Leiter angeordnet und haben besonders auch Festigkeitseigenschaften im Hinblick auf die Kompression des flexiblen schlauchartigen Leiters zu erfüllen. Dieser wird neben der mechanischen Beeinflussung durch Zugkräfte auch durch den in größeren Meerestiefen herrschenden Umgebungsdruck belastet und die derart formschlüssig verbundenen Z-Profilbänder (auch andere Querschnittsformen werden hier eingesetzt wie beispielsweise T-Profile, C-Profile, K-Profile, X-Profile oder dgl.) sollen den Außendruck abstützen, damit der schlauchartige Leiter nicht unzulässig komprimiert wird. Daher ist es in einer weiteren Ausgestaltung auch denkbar, dass der hochfeste Stahl für ein Schmalband als Karkasse in einem schlauchartigen flexiblen Kern eines flexiblen Rohrs eingesetzt wird. Weiterhin kann in einer anderen Ausgestaltung ein solches Schmalband als entsprechend in seinem Querschnitt geformter Halter für ein anderes längserstrecktes Element genutzt werden, wobei derartige längserstreckte Elemente beispielsweise metallische oder mehrkomponentige oder polymere Materialien zur Verbesserung von Festigkeit und Auftrieb aufweisen können.

Die Erfindung betrifft weiterhin ein Verfahren zur Herstellung von kaltgewalztem Schmalband in Form von Flachdraht oder Formschlussprofilen aus einem hochfesten Stahl gemäß Anspruch 1, bei dem der hochfeste Stahl nach dem Erschmelzen und einer optionalen sekundärmetallurgischen Behandlung der Schmelze zu Knüppeln oder zu Blöcken abgegossen wird, die Knüppel oder Blöcke mittels Warmwalzen auf Draht-Durchmesser zwischen 5 - 30 mm ausgewalzt und entzundert und anschließend auf einer Ziehanlage in einem oder mehreren Zügen im kalten Zustand als Draht auf einen definierten Zwischendurchmesser gezogen wird, wonach dieser Stahldraht in einem oder mehreren Stichen unter Zwischenschaltung mindestens einer Glühbehandlung auf die Endabmessungen und die Endform kaltgewalzt wird. Kennzeichnend an diesem Herstellungsverfahren ist es, dass der ganze Herstellungsweg sich über die Drahtschiene erstreckt, also nicht Bänder aus blechartigen oder breiten Band-Vorprodukten verwendet, sondern direkt nach dem Vergießen des Stahls in Form von Knüppeln oder Blöcken diesen Stahl warm auf drahtförmige Querschnitte walzt und von diesen ausgehend dann durch eine Abfolge von jeweils in kaltem Zustand erfolgenden Ziehbearbeitungen und Kaltwalzbearbeitungen immer endmaßnäher umformt. Dabei können je nach dem Ablauf der Bearbeitungsschritte und den geforderten Festigkeitswerten Zwischen- und Endglühungen zwischen den jeweiligen Kaltbearbeitungen erfolgen, durch die die geforderten mechanischen Eigenschaften gezielt beeinflusst und verbessert werden können. Insbesondere die Kombination von jeweils in kaltem Zustand erfolgenden Ziehbearbeitungen und Kaltwalzbearbeitungen sowie Glühbehandlungen lassen eine weitgehende Beeinflussung der Gefügestruktur und der Gefügeorientierung zu, die nur durch Kaltwalzen allein schwer zu erzeugen ist.

Hierdurch können für die erfindungsgemäße Verwendung für flexible Rohre für die Erdöl- und Erdgas-Förderung besonders geeignete Stahllegierung kalt-flachgewalzte Drähte und kaltgewalzte Profile direkt aus Draht hergestellt werden. So kann z.B. eine im Elektrostahlwerk erschmolzene erfindungsgemäße Stahllegierung sekundärmetallurgisch nachbehandelt werden, die anschließend in einer Vakuumanlage entgast und zu Knüppeln im Strangguß oder zu Blöcken abgegossen wird. Diese direkt gegossenen oder umgeblockten quadratischen Knüppel werden dann in einem Wärmeofen auf Temperaturen von ca. 1150°C erwärmt und in einer Walzdrahtstrasse auf Drahtdurchmesser zwischen 5 - 30 mm ausgewalzt und abgekühlt. Anschließend kann das 1 bis 3 Tonnen schwere Walzdrahtbund dann zur Entzunderung in Mischsäuren gebeizt oder mechanisch entzundert werden. Der zunderfreie Walzdraht wird anschließend auf einer Ziehanlage in einem oder mehreren Zügen im kalten Zustand auf einen definierten Zwischendurchmesser gezogen. Durch das Ziehen des Stahldrahtes wird die Ovalität des Drahtes beseitigt und eine Vorverfestigung erzeugt. Der definierte Zieh-Durchmesser wird passend zum Endquerschnitt und der zu erwartenden Breitung beim Kaltwalzen ausgewählt.

Anschließend kann in einer ersten vorteilhaften Ausgestaltung der kaltgezogene Stahldraht mittels Flachwalzen des Drahtes auf eine Zwischenabmessung, mindestens eine Glühbehandlung und mindestens ein Kaltwalzen auf eine rechteckige Endabmessung mit runden oder definiert angewalzten Kanten gebracht werden. Dies ist der Weg der Herstellung von Drähten/Schmalbändern als Verstärkungsband in Armierungslagen entsprechender flexibler Rohre.

In einer anderen Ausgestaltung kann der kaltgezogene Stahldraht mittels Kaltwalzen in einem oder mehreren Stichen auf ein definiertes Zwischenprofil gewalzt, anschließend mindestens einmal geglüht und durch mindestens ein Kaltwalzen auf die profilierte Endform, insbesondere eine Z-förmige oder auf sonstige Weise profilierte Endform, insbesondere eine Profilform eines Formschlussprofils, gebracht werden. Diese Formschlussprofile weisen aufgrund der sich bei der Fertigung des flexiblen Rohres ergebenden formschlüssigen Festlegung benachbart angeordneter Drähte/Schmalbänder aneinander besonders hohe mechanische Längs- und Querstabilitäten auf und beeinträchtigen die Flexibilität des flexiblen Rohres nicht über die Maße. Dabei kommt es neben der Festigkeit des einzelnen Drahtes/Schmalbandes auch auf eine hochgenaue Querschnittformung an, damit die miteinander verschränkten Bänder fest aneinander befestigt werden können. In anderer Ausgestaltung kann z.B. für einfache Profilendquerschnitte auch ohne das Walzen auf ein Zwischenprofil direkt das Endprofil gewalzt werden.

In weiterer Ausgestaltung wird nach dem Kaltwalzen auf die profilierte Endform optional eine Glühbehandlung, insbesondere ein Spannungsarmglühen oder Spannungsfreiglühen des erzeugten Drahtes/Schmalbandes durchgeführt. Hierdurch können die mechanischen Eigenschaften des erzeugten Drahtes/Schmalbandes nach der letzten Formgebung weiter beeinflusst werden, insbesondere kann die Glühbehandlung als finale Behandlung zur Einstellung der mechanischen Werte und/oder zum Abbau der Eigenspannungen dienen.

In einer ersten Ausgestaltung kann die Glühbehandlung zwischen den Zieh- und/oder Walzbehandlungen als Haubenglühen im Coil unter Schutzgas, bevorzugt unter H₂-Atmosphäre durchgeführt werden. Hierbei wird das gesamte Coil gleichzeitig geglüht, was energietechnische Vorteile aufweist.

Alternativ ist es aber auch denkbar, dass die Glühbehandlung zwischen den Zieh- und/oder Walzbehandlungen im Durchlaufverfahren mit konduktiver oder auch mit induktiver Erwärmung durchgeführt wird. Hierbei werden immer nur kurze Abschnitte des Drahtes/Schmalbandes lokal beim Durchlauf durch entsprechende Erwärmungseinrichtungen erhitzt, wodurch eine gezieltere Temperaturführung und eine gezieltere Beeinflussung der Gefügeveränderung aufgrund des Glühens erreichbar ist, gleichzeitig aber auch eine Reduzierung der Durchlaufzeit des Drahtes/Schmalbandes einher geht.

Das erreichte Temperaturprofil kann bei jeder Wärmebehandlung eine schnelle Aufheizung und beschleunigte oder kontrollierte Abkühlung des Drahtes beinhalten, um eine optimale Textur und Eigenschaften in dem Stahl zu erzeugen.

Weiterhin ist es denkbar, dass die Schmelze im Stahlwerk mit einer metallurgischen Calzium-Behandlung mit min. 0,0015% Ca zur Beeinflussung der Einschlussgröße und Einschlussform der nichtmetallischen Einschlüsse behandelt wird. Diese Behandlung führt zu fein verteilten und eingeformten Ca-Einschlüssen, die im Gegensatz zu groben und linienförmigen Einschlüssen unempfindlich gegenüber sauren Medien (Wasserstoff-induzierte Spannungsriss-Korrosion) sind.

Die Erfindung beschreibt weiterhin eine Verwendung des kaltgewalzten Flachdrahts oder Schmalbands mit profiliertem Formschlussprofilen gemäß Anspruch 1 für ein flexibles Rohr für die Erdöl- und Erdgasförderung sowie zum Transport von Flüssiggas (FLNG) mit Sauergas-Bedingungen (saure Angriffsmedien), aufweisend einen inneren schlauchartigen Fluidleiter sowie mindestens eine Lage schraubenförmig in dem Fluidleiter angeordneter oder auf oder über den Fluidleiter gewickelter Armierungsbänder aus dem hochfesten Stahl für Flachdraht oder Schmalband mit profiliertem Querschnitt gemäß Anspruch 1.

Eine besonders bevorzugte Ausführungsform eines flexiblen Rohrs unter Verwendung der erfindungsgemäßen Drähte/Schmalbänder zeigt die Zeichnung.

Es zeigt:

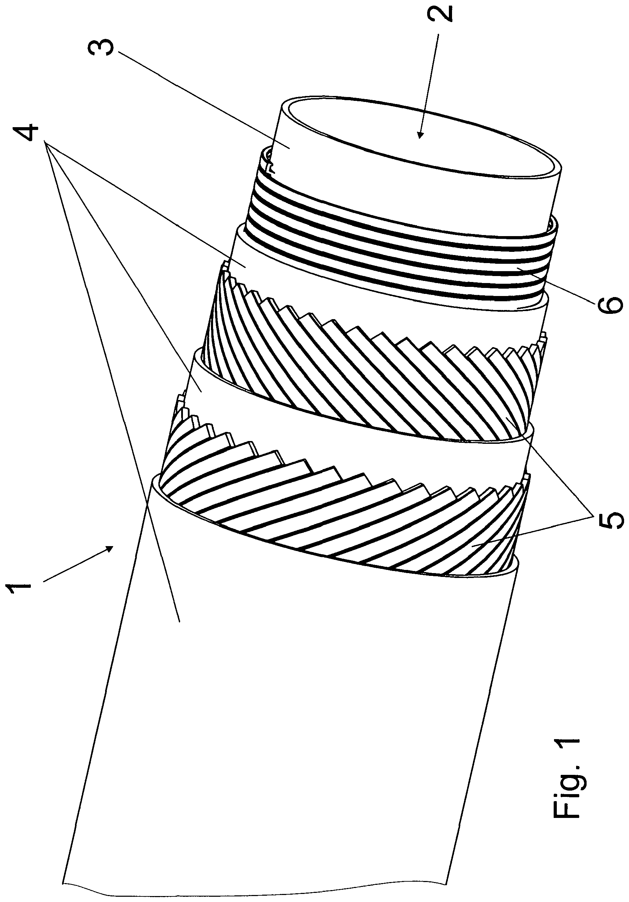

- Figur 1: - einen schichtweisen Aufbau eines flexiblen Rohrs unter Verwendung der erfindungsgemäßen Drähte/Schmalbänder zum Einsatz in der Erdöl- und Erdgasförderung sowie zum Transport von Flüssiggas (FLNG) mit Sauergas-Bedingungen (saure Angriffsmedien).

Ein flexibles Rohr 1, das unter Verwendung der aus dem erfindungsgemäßen Stahl bzw. den erfindungsgemäßen Schmalbändern/Drähten hergestellt ist, besteht aus einem inneren schlauchförmigen Innenrohr 3, das eine längserstreckte Öffnung 2 für die Leitung von Fluiden wie Flüssigkeiten oder Gasen aufweist. Das schlauchförmige Innenrohr 3 besteht üblicherweise aus einem polymeren Material und dichtet die längserstreckte Öffnung 2 und damit das zu leitende Fluid gegenüber der Umgebung ab.

Umgeben wird das schlauchförmige Innenrohr 3 von mehreren Lagen aus Polymeren sowie mindestens zwei Lagen Verstärkungsband 5 und optional einer (oder auch mehrerer Lagen) eines Formschlussprofils 6. Hierbei kann das Formschlussprofil 6 wie hier dargestellt unmittelbar auf dem Innenrohr 3 schraubenförmig unter einem kleinen Schrägungswinkel aufgewickelt. Das Formschlussprofil 6 weist dabei einen derartigen Querschnitt auf, dass sich aufgrund der schraubenförmig Wicklung benachbart zu liegen kommende Windungen des gleichen oder eines oder mehrerer weiterer Formschlussprofile 6 formschlüssig entlang ihrer Kanten miteinander verhaken können und damit einen wesentlich stabileren Verbund bilden, als wenn die Formschlussprofile 6 nur einfach nebeneinander liegend gewickelt werden. Hierdurch kann die gewickelten Formschlussprofile 6 deutlich zu den Festigkeitseigenschaften des flexiblen Rohrs 1 beitragen.

Oberhalb der Lage des Formschlussprofils 6 sind, jeweils getrennt von der optionalen Lage des Formschlussprofils 6 und weiteren Lagen 4 aus Polymermaterial sind hier zwei Lagen aus Verstärkungsband 5 angeordnet, wobei das diese Lage bildende Verstärkungsband 5 (oder auch nebeneinander liegend gewickelt mehrere Verstärkungsbänder 5) sich an den Kanten berühren kann, aber nicht miteinander verbunden angeordnet sind. Auch ist das diese Lage bildende Verstärkungsband 5 unter einem deutlich größeren Schrägungswinkel aufgewickelt.

Nachstehend sind in zwei Tabellen zwei beispielhafte Zusammensetzungen des erfindungsgemäßen Flachdrahts oder Schmalbands sowie daran ermittelte Werte für mechanische Kenngrößen angegeben:

**Tabelle 1: chemische Analyse von zwei Beispiellegierungen**

| **Legierung** | **C** | **Si** | **Mn** | **P** | **S** | **Al** | **Cr** | **N** | **Ni** | **V** | **Nb** |
|---|---|---|---|---|---|---|---|---|---|---|---|
| 1 | 0,42 | 0,38 | 18,8 | 0,019 | 0,001 | 1,3 | 2,4 | 0,0070 | 0,68 | 0,12 | 0,01 |
| 2 | 0,35 | 0,36 | 17,5 | 0,016 | 0,001 | 1,2 | 2,5 | 0,0065 | 0,53 | 0,02 | 0,11 |

**Tabelle 2: mechanische Werte der Legierungen im Fertigungszustand**

| **Legierung** | **Rp0,2 (MPa)** | **Rm (MPa)** | **Rp/Rm** | **Bruchdehnung A80 (%)** |
|---|---|---|---|---|
| 1 | 1146 | 1267 | 0,904 | 16 |
| 1 | 1037 | 1238 | 0,838 | 18 |
| 1 | 992 | 1218 | 0,814 | 20 |
| 2 | 1103 | 1217 | 0,906 | 18 |
| 2 | 1012 | 1193 | 0,848 | 19 |
| 2 | 941 | 1176 | 0,800 | 21 |
| 1 | 1232 | 1430 | 0,862 | 13 |
| 1 | 1362 | 1567 | 0,869 | 9 |
| 1 | 1429 | 1664 | 0,859 | 8 |
| 1 | 1481 | 1718 | 0,862 | 6 |

Die Beipiele 3, 6 und 10 in Tabelle 2 stellen hierbei nicht zur Erfindung gehörige Referenzbeispiele dar.

**Sachnummernliste**

| | |
|---|---|
| 1 | - flexibles Rohr |
| 2 | - längserstreckte Öffnung |
| 3 | - schlauchförmiges Innenrohr |
| 4 | - Lagen aus Polymeren |
| 5 | - Verstärkungsband |
| 6 | - Formschlussprofil |

## Patentansprüche

1. Kaltgewalztes Schmalband in Form von Flachdraht oder Formschlussprofilen aus einem hochfesten Stahl aufweisend ein austenitisches Gefüge mit TWIP-Eigenschaften mit folgender Zusammensetzung in Gewichts-%
C 0,2 - 0,9 %
Mn 12 - 25 %
Si bis zu 0,5 %
Al 0,5 - 2,0 %
Cr 1,8 - 3,5 %
S max. 0,005 %
P max. 0,06 %
N max. 0,1 %
Mo max. 1,5 %
B max. 0,01 %
Ni max. 2,0 %
Cu max. 2,0 %
Nb 0,02 - 0,35 % und/oder V 0,02 - 0,35
sowie optional
Ca max. 0,015 %
Ti 0,01 - 0,35 %
und als Rest Eisen und unvermeidbare, herstellungsbedingte Verunreinigungen,
mit folgenden mechanischen Werten:
| | |
|---|---|
| R_{p0,2} | 1000 - 1500 MPa, |
| Rₘ | 1100 - 1700 MPa, |
| A80 | 6 - 25 %, |
für die Herstellung von Armierungslagen in flexiblen Rohren für die Erdöl- und Erdgasförderung sowie zum Transport von Flüssiggas FLNG mit Sauergas-Bedingungen bei sauren Angriffsmedien.

2. Kaltgewalztes Schmalband gemäß Anspruch 1, **dadurch gekennzeichnet, dass** der Gehalt an C 0,3 - 0,6 % beträgt.

3. Kaltgewalztes Schmalband gemäß Anspruch 1, **dadurch gekennzeichnet, dass** der Gehalt an Mn 16 - 23 % beträgt.

4. Kaltgewalztes Schmalband gemäß Anspruch 1, **dadurch gekennzeichnet, dass** der Gehalt an Si 0,2 - 0,5 % beträgt.

5. Kaltgewalztes Schmalband gemäß Anspruch 1, **dadurch gekennzeichnet, dass** der Gehalt an Al 0,80 - 1,5 % beträgt.

6. Kaltgewalztes Schmalband gemäß Anspruch 1, **dadurch gekennzeichnet, dass** der Gehalt an Cr 2,0 bis 2,7 % beträgt.

7. Kaltgewalztes Schmalband gemäß Anspruch 1, **dadurch gekennzeichnet, dass** der Gehalt an S max. 0,003 % beträgt.

8. Kaltgewalztes Schmalband gemäß Anspruch 1, **dadurch gekennzeichnet, dass** der Gehalt an P max. 0,035 % beträgt.

9. Kaltgewalztes Schmalband gemäß Anspruch 1, **dadurch gekennzeichnet, dass** der Gehalt an Nb und/oder V jeweils 0,05-0,20 % beträgt.

10. Kaltgewalztes Schmalband gemäß einem der vorstehenden Ansprüche, **dadurch gekennzeichnet, dass** das Schmalband runde oder flache oder definiert angewalzte Kanten aufweist.

11. Kaltgewalztes Schmalband gemäß einem der vorstehenden Ansprüche, **dadurch gekennzeichnet, dass** das Schmalband einen Querschnitt in Form eines Z-Profils aufweist.

12. Verfahren zur Herstellung von kaltgewalztem Schmalband in Form von Flachdraht oder Formschlussprofilen aus einem hochfesten Stahl gemäß Anspruch 1,
**dadurch gekennzeichnet, dass**
der hochfeste Stahl zu Knüppeln oder zu Blöcken abgegossen wird, die Knüppel oder Blöcke mittels Warmwalzen auf Draht-Durchmesser zwischen 5 - 30 mm ausgewalzt und entzundert und anschließend auf einer Ziehanlage in einem oder mehreren Zügen im kalten Zustand als Draht auf einen definierten Zwischendurchmesser gezogen wird, wonach dieser Stahldraht in einem oder mehreren Stichen unter Zwischenschaltung mindestens einer Glühbehandlung auf die Endabmessungen und die Endform kaltgewalzt wird.

13. Verfahren gemäß Anspruch 12, **dadurch gekennzeichnet, dass** die Stahlschmelze mit einer Calzium-Behandlung mit einem Ca-Gehalt von min. 0,0015 Gewichts-% behandelt wird.

14. Verfahren gemäß Anspruch 12, **dadurch gekennzeichnet, dass** eine im Elektrostahlwerk erschmolzene Stahllegierung gemäß Anspruch 1 sekundärmetallurgisch nachbehandelt, in einer Vakuumanlage entgast und im Strangguß zu Knüppeln oder Blöcken abgegossen wird.

15. Verfahren gemäß einem der Ansprüche 12 bis 14, **dadurch gekennzeichnet, dass** die direkt gegossenen oder umgeblockten, vorzugsweise quadratischen Knüppel oder Blöcke in einem Wärmeofen auf Temperaturen von ca. 1150°C erwärmt und in einer Walzdrahtstrasse auf Draht-Durchmesser zwischen 5 - 30 mm ausgewalzt und anschließend abgekühlt werden.

16. Verfahren gemäß einem der Ansprüche 12 bis 15, **dadurch gekennzeichnet, dass** der warmgewalzte Stahldraht zur Entzunderung gebeizt, insbesondere in Mischsäuren gebeizt oder mechanisch entzundert, und anschließend auf einer Ziehanlage in einem oder mehreren Zügen im kalten Zustand auf einen definierten Zwischendurchmesser gezogen wird.

17. Verfahren gemäß Anspruch 12 bis 16, **dadurch gekennzeichnet, dass** der kaltgezogene Stahldraht mittels Flachwalzen des Drahtes auf eine Zwischenabmessung, mindestens einer Glühbehandlung und mindestens einem Kaltwalzen auf eine rechteckige Endabmessung mit runden oder flachen oder definiert angewalzten Kanten gebracht wird.

18. Verfahren gemäß einem der Ansprüche 12 bis 17, **dadurch gekennzeichnet, dass** der kaltgezogene Stahldraht mittels Kaltwalzen in einem oder mehreren Stichen auf ein definiertes Zwischenprofil gewalzt, anschließend mindestens einmal geglüht und durch mindestens ein Kaltwalzen auf die profilierte Endform, insbesondere eine Z-förmige oder auf sonstige Weise profilierte Profilform eines Formschlussprofils, gebracht wird.

19. Verfahren gemäß Anspruch 18, **dadurch gekennzeichnet, dass** nach dem Kaltwalzen auf die profilierte Endform eine Glühbehandlung durchgeführt wird.

20. Verfahren gemäß Anspruch 19, **dadurch gekennzeichnet, dass** nach dem Kaltwalzen auf die profilierte Endform ein Spannungsarmglühen oder Spannungsfreiglühen im Temperaturbereich zwischen 400 - 700 °C durchgeführt wird.

21. Verfahren gemäß einem der Ansprüche 17 bis 20, **dadurch gekennzeichnet, dass** die Glühbehandlung zwischen den Zieh- und/oder Walzbehandlungen als Haubenglühen im Coil, unter Schutzgas, bevorzugt unter H₂-Atmosphäre durchgeführt wird.

22. Verfahren gemäß einem der Ansprüche 17 bis 20, **dadurch gekennzeichnet, dass** die Glühbehandlung zwischen den Zieh- und/oder Walzbehandlungen im Durchlaufverfahren mit konduktiver Erwärmung durchgeführt wird.

23. Verfahren gemäß einem der Ansprüche 17 bis 20, **dadurch gekennzeichnet, dass** die Glühbehandlung zwischen den Zieh- und/oder Walzbehandlungen im Durchlaufverfahren mit induktiver Erwärmung durchgeführt wird.

24. Verwendung des kaltgewalzten Schmalbandes in Form von Flachdraht oder Formschlussprofilen gemäß Anspruch 1 als Armierungsband für Armierungslagen für ein flexibles Rohr für die Erdöl- und Erdgasförderung sowie zum Transport von Flüssiggas (FLNG) mit Sauergas-Bedingungen (saure Angriffsmedien), das flexible Rohr aufweisend einen inneren schlauchartigen Fluidleiter sowie mindestens eine Lage schraubenförmig in dem Fluidleiter angeordneter oder auf oder über den Fluidleiter gewickelter Armierungsbänder aus dem hochfesten Stahl für kaltgewalztes Schmalband in Form von Flachdraht oder Profilen gemäß Anspruch 1.

25. Verwendung des kaltgewalzten Schmalbandes gemäß Anspruch 24, **dadurch gekennzeichnet, dass** das Schmalband als entsprechend in seinem Querschnitt geformtes Formschlußprofil einsetzbar ist.

26. Verwendung des kaltgewalzten Schmalbandes gemäß Anspruch 25, **dadurch gekennzeichnet, dass** das Schmalband mit profiliertem Querschnitt als Z-Profil als Armierungsband für die Herstellung von gewickelten Armierungslagen einsetzbar ist.

27. Verwendung des kaltgewalzten Schmalbandes gemäß Anspruch 24, **dadurch gekennzeichnet, dass** der hochfeste Stahl für ein Schmalband mit runden oder flachen oder definiert angewalzten Kanten als Verstärkungsband für die Herstellung von gewickelten Armierungslagen einsetzbar ist.

28. Verwendung des kaltgewalzten Schmalbandes gemäß Anspruch 1 für Karkassen in einem schlauchartigen flexiblen Kern des flexiblen Rohrs.

## Claims

1. Cold-rolled narrow strip in the form of flat wire or positive engangement profiles made of a high-strength steel having an austenitic microstructure with TWIP properties with the the following composition (in weight-%):
C 0.2 - 0.9%
Mn 12 - 25%
Si up to 0.5%
Al 0.5 - 2.0%
Cr 1.8 - 3.5%
S max. 0.005%
P max. 0.06%,
N max. 0.1%,
Mo max. 1.5%,
B max. 0.01%,
Ni max. 2.0%,
Cu max. 2.0%,
Nb 0.02 - 0.35% and/or V 0.02 - 0.35%
as well as optionally
Ca max. 0.015%
Ti 0.01 - 0.35%,
and, as the remainder, iron and unavoidable, production-related contaminants, with the following mechanical values:
| | |
|---|---|
| R_{p0.2} | 1000 - 1500 MPa, |
| Rₘ | 1100 - 1700 MPa, |
| A80 | 6 - 25%, |
for the production of reinforcing layers in flexible pipes for the crude oil and natural gas production as well as for the transport of liquefied gas FLNG with sour gas conditions in acidic attack media.

2. Cold-rolled narrow strip according to claim 1, **characterized in that** the content of C is 0.3 - 0.6%.

3. Cold-rolled narrow strip according to claim 1, **characterized in that** the content of Mn is 16 - 23%.

4. Cold-rolled narrow strip according to claim 1, **characterized in that** the content of Si is 0.2 - 0.5 %.

5. Cold-rolled narrow strip according to claim 1, **characterized in that** the content of Al is 0.80 - 1.5 %.

6. Cold-rolled narrow strip according to claim 1, **characterized in that** the Cr content is 2.0 to 2.7 %.

7. Cold-rolled narrow strip according to claim 1, **characterized in that** the content of S is max. 0.003 %.

8. Cold-rolled narrow strip according to claim 1, **characterized in that** the content of P is max. 0.035 %.

9. Cold-rolled narrow strip according to claim 1, **characterized in that** the content of Nb and/or V is 0.05-0.20% in each case.

10. Cold-rolled narrow strip according to one of the preceeding claims, **characterized in that** the narrow strip has round or flat or defined rolled edges.

11. Cold-rolled narrow strip according to one of the preceeding claims, **characterized in that** the narrow strip has a cross-section in the form of a Z-profile.

12. Method for the production of cold-rolled narrow strip in the form of flat wire or positive engangement profiles from a high strength steel according to claim 1,
**characterised in that**
the high-strength steel is cast into billets or blocks, the billets or blocks are rolled by means of hot rolling to a wire diameter of between 5 - 30 mm and descaled and subsequently drawn on a drawing installation in one or more passes in the cold state as wire to a defined intermediate diameter, and afterwards this steel wire is cold-rolled in one or more passes, with at least one annealing treatment being interposed, to the final dimensions and the final shape.

13. Method according to claim 12, **characterized in that** the steel melt is treated with a calcium treatment having a Ca content of at least 0.0015% by weight.

14. Method according to claim 12, **characterized in that** a steel alloy according to claim 1 molten in an electric steel mill is post-treated secondary metalurgically, degassed in a vacuum system and cast into billets or blocks by means of continuous casting.

15. Method according to one of claims 12 to 14, **characterized in that** the directly casted or recasted, preferably square billets or blocks are heated to temperatures of approximately 1150°C in a heating furnace and rolled in a wire rod lane to wire diameters between 5 - 30 mm and subsequently cooled.

16. Method according to one of claims 12 to 15, **characterized in that** the hot-rolled steel wire is pickled to remove scale, in particular pickled in mixed acids or mechanically descaled, and subsequently drawn on a drawing installation in one or more passes in the cold state to a defined intermediate diameter.

17. Method according to claims 12 to 16, **characterized in that** the cold-drawn steel wire is rolled to a defined intermediate dimension by means of flat rolling, and brought to a rectangular final dimension with round or flat or defined rolled edges by at least one annealing treatment and at least one cold rolling treatment.

18. Method according to one of claims 12 to 17, **characterized in that** the cold-drawn steel wire is rolled by means of cold rolling in one or more passes to a defined intermediate profile, then annealed at least once and brought by at least one cold rolling treatment to the profiled final shape, in particular a Z-shaped or otherwise profiled profile shape of a positive engangement profile.

19. Method according to claim 18, **characterized in that** an annealing treatment is carried out after cold rolling to the profiled final shape.

20. Method according to claim 19, **characterized in that** after cold rolling to the profiled final shape a stress-relief annealing or stress-free annealing is carried out in the temperature range between 400 - 700°C.

21. Method according to one of claims 17 to 20, **characterized in that** the annealing treatment between the drawing and/or rolling treatments is carried out as hood annealing in the coil, under inert gas, preferably under H₂ atmosphere.

22. Method according to one of claims 17 to 20, **characterized in that** the annealing treatment between the drawing and/or rolling treatments is carried out in a continuous process with conductive heating.

23. Method according to one of claims 17 to 20, **characterized in that** the annealing treatment between the drawing and/or rolling treatments is carried out in a continuous process with inductive heating.

24. Use of the cold-rolled narrow strip in the form of flat wire or positive engangement profiles according to claim 1 as reinforcing strip for reinforcing layers for a flexible pipe for crude oil and natural gas production and for transporting liquid gas (FLNG) under acid gas conditions (acid attack media), the flexible tube comprising an inner hose-like fluid conductor and at least one layer of reinforcing strips disposed helically in the fluid conductor or wound onto or over the fluid conductor made from high-strength steel for cold-rolled narrow strip in the form of flat wire or profiles according to claim 1.

25. Use of the cold-rolled narrow strip according to claim 24, **characterized in that** the narrow strip can be used as a positive engangement profile shaped correspondingly in its cross-section.

26. Use of the cold-rolled narrow strip according to claim 25, **characterized in that** the narrow strip with a profiled cross-section can be used as a Z-profile reinforcement strip for the production of wound reinforcement layers.

27. Use of the cold-rolled narrow strip according to claim 24, **characterized in that** the high-strength steel can be used for a narrow strip with round or flat or defined rolled edges as reinforcing strip for the production of wound reinforcement layers.

28. Use of the cold rolled narrow strip according to claim 1 for carcasses in a tubular flexible core of the flexible tube.

## Revendications

1. Feuillard laminé à froid sous la forme d'un fil plat ou de profilés à complémentarité de forme en acier à résistance élevée, présentant une structure austénitique avec des propriétés TWIP, avec une composition suivante en % en poids
C 0,2 - 0,9 %,
Mn 12 - 25 %,
Si jusqu'à 0,5 %,
Al 0,5 - 2,0 %,
Cr 1,8 - 3,5 %,
S au max. 0,005 %,
P au max. 0,06 %
N au max. 0,1 %,
Mo au max. 1,5 %,
B au max. 0,01 %
Ni au max. 2,0 %,
Cu au max. 2,0 %,
Nb 0,02 - 0,35 % et/ou V 0,02 - 0,35
ainsi qu'en option
Ca au max. 0,015 %,
Ti 0,01 - 0,35 %,
et le reste étant du fer et des impuretés inévitables liées à la fabrication, avec des valeurs mécaniques suivantes
R_{p0,2} 1000 - 1500 MPa,
Rₘ 1100 - 1700 MPa,
A80 6 - 25 %,
pour la fabrication de couches d'armature dans des tubes flexibles pour l'extraction de pétrole et de gaz naturel ainsi que pour le transport de gaz naturel liquéfié (GNL) avec des conditions de gaz acide pour des milieux agressifs acides.

2. Feuillard laminé à froid selon la revendication 1, **caractérisé en ce que** la teneur en C est de 0,3 - 0,6 %.

3. Feuillard laminé à froid selon la revendication 1, **caractérisé en ce que** la teneur en Mn est de 16 - 23 %.

4. Feuillard laminé à froid selon la revendication 1, **caractérisé en ce que** la teneur en Si est de 0,2 - 0,5 %.

5. Feuillard laminé à froid selon la revendication 1, **caractérisé en ce que** la teneur en Al est de 0,80 - 1,5 %.

6. Feuillard laminé à froid selon la revendication 1, **caractérisé en ce que** la teneur en Cr est de 2,0 à 2,7 %.

7. Feuillard laminé à froid selon la revendication 1, **caractérisé en ce que** la teneur en S est au max. de 0,003 %.

8. Feuillard laminé à froid selon la revendication 1, **caractérisé en ce que** la teneur en P est au max. de 0,035 %.

9. Feuillard laminé à froid selon la revendication 1, **caractérisé en ce que** la teneur en Nb et/ou en V est de respectivement 0,05 - 0,20 %.

10. Feuillard laminé à froid selon l'une quelconque des revendications précédentes, **caractérisé en ce que** le feuillard présente des arêtes rondes ou plates ou laminées de manière définie.

11. Feuillard laminé à froid selon l'une quelconque des revendications précédentes, **caractérisé en ce que** le feuillard présente une section transversale sous la forme d'un profilé en Z.

12. Procédé servant à fabriquer un feuillard laminé à froid sous la forme d'un fil plat ou de profilés à complémentarité de forme à partir d'un acier à résistance élevée selon la revendication 1,
**caractérisé en ce que**
l'acier à résistance élevée est coulé en billettes ou en blocs, les billettes ou les blocs sont laminés au moyen d'un laminage à chaud sur un diamètre de fil entre 5 - 30 mm et sont décalaminés, puis est tréfilé en tant que fil sur un diamètre intermédiaire défini dans l'état froid en une ou plusieurs passes sur une installation de tréfilage, ledit fil d'acier étant après quoi laminé à froid sur les dimensions finales et la forme finale en une ou plusieurs passes en intercalant au moins un traitement de recuit.

13. Procédé selon la revendication 12, **caractérisé en ce que** la matière fondue en acier est traitée avec un traitement au calcium avec une teneur en Ca au min. de 0,0015 % en poids.

14. Procédé selon la revendication 12, **caractérisé en ce qu'**un alliage en acier fondu dans une aciérie électrique selon la revendication 1 est traité ultérieurement selon une technique de métallurgie secondaire, est dégazéifié dans une installation sous vide et est coulé par coulée continue en des billettes ou des blocs.

15. Procédé selon l'une quelconque des revendications 12 à 14, **caractérisé en ce que** les billettes ou les blocs coulés directement ou adaptés dans des blocs, de préférence carrés sont réchauffés dans un four de chauffage à des températures d'env. 1150 °C et sont laminés dans une ligne de fil de laminage sur un diamètre de fil entre 5 - 30 mm puis sont refroidis.

16. Procédé selon l'une quelconque des revendications 12 à 15, **caractérisé en ce que** le fil d'acier laminé à chaud est décapé aux fins du décalaminage, en particulier est décapé dans des acides lactiques ou est décalaminé mécaniquement, puis est tréfilé sur un diamètre intermédiaire défini dans l'état froid en une ou plusieurs passes sur une installation de tréfilage.

17. Procédé selon la revendication 12 à 16, **caractérisé en ce que** le fil d'acier tréfilé à froid se voit conférer au moyen d'un laminage à plat du fil une dimension intermédiaire, au moyen d'un traitement de recuit et d'au moins un laminage à froid une dimension finale rectangulaire avec des arêtes rondes ou plates ou laminées de manière définie.

18. Procédé selon l'une quelconque des revendications 12 à 17, **caractérisé en ce que** le fil d'acier tréfilé à froid est laminé sur un profil intermédiaire défini en une ou plusieurs passes au moyen d'un laminage à froid, puis est recuit au moins une fois et se voit conférer par au moins un laminage à froid la forme finale profilée, en particulier une forme de profilé d'un profilé à complémentarité de forme profilée en forme de Z ou d'une autre manière.

19. Procédé selon la revendication 18, **caractérisé en ce qu'**un traitement de recuit est effectué après le laminage à froid sur la forme finale profilée.

20. Procédé selon la revendication 19, **caractérisé en ce qu'**est effectué après le laminage à froid sur la forme finale profilée un recuit de détente ou un recuit de stabilisation dans la plage de températures entre 400 - 700 °C.

21. Procédé selon l'une quelconque des revendications 17 à 20, **caractérisé en ce que** le traitement de recuit est effectué entre les traitements de tréfilage et/ou de laminage en tant que recuit sous cloche dans la bobine, sous un gaz protecteur, de préférée sous une atmosphère de H₂.

22. Procédé selon l'une quelconque des revendications 17 à 20, **caractérisé en ce que** le traitement de recuit est effectué entre les traitements de tréfilage et/ou de laminage dans le procédé continu avec un chauffage par conduction.

23. Procédé selon l'une quelconque des revendications 17 à 20, **caractérisé en ce que** le traitement de recuit est effectué entre les traitements de tréfilage et/ou de laminage dans le procédé continu avec un chauffage par induction.

24. Utilisation du feuillard laminé à froid sous la forme d'un fil plat ou de profilés à complémentarité de forme selon la revendication 1 en tant que bande d'armature pour des couches d'armature pour un tube flexible pour l'extraction de pétrole et de gaz naturel ainsi que pour le transport de gaz naturel liquéfié (GNL) avec des conditions de gaz acide (milieux agressifs acides), le tube flexible présentant un conduit de fluide de type tuyau flexible ainsi qu'au moins une couche de bandes d'armature disposées de manière hélicoïdale dans le conduit de fluide ou enroulées sur ou par-dessus le conduit de fluide, composées de l'acier à résistance élevée pour le feuillard laminé à froid sous la forme de fil plat ou de profilés selon la revendication 1.

25. Utilisation du feuillard laminé à froid selon la revendication 24, **caractérisé en ce que** le feuillard peut être employé en tant que profilé à complémentarité de forme formé de manière correspondante dans sa section transversale.

26. Utilisation du feuillard laminé à froid selon la revendication 25, **caractérisé en ce que** le feuillard avec une section transversale profilée peut être employé en tant que profilé en Z en tant que bande d'armature pour la fabrication de couches d'armature enroulées.

27. Utilisation du feuillard laminé à froid selon la revendication 24, **caractérisée en ce que** l'acier à résistance élevée pour un feuillard avec des arêtes rondes ou plates ou laminées de manière définie peut être employé en tant que bande de renforcement pour la fabrication de couches d'armature enroulées.

28. Utilisation du feuillard laminé à froid selon la revendication 1 pour des carcasses dans une partie centrale flexible de type tuyau flexible du tube flexible.
